# EUROPEAN PATENT SPECIFICATION

(11) **EP 0 185 944 B1**
(45) Date of publication and mention of the grant of the patent: **11.01.1995**
(21) Application number: 85114933.6
(22) Date of filing: 26.11.1985
(51) Int. Cl.: H01J 49/38

(54) **Fourier transform ion cyclothon resonance mass spectrometer with spatially separated sources and detector**
Fourier-Transformation-Ionen-Zyklotron-Resonanz-Massenspektrometer mit räumlicher Trennung von Quellen und Detektor
Spectromètre de masse à résonance cyclotronique à technique de Fourier avec séparation spatiale des sources et du détecteur

(30) Priority: 24.12.1984 US 685811
(43) Date of publication of application: 02.07.1986
(73) Proprietor: AMERICAN CYANAMID COMPANY, Wayne, NJ 07470-8426 (US)
(72) Inventor: Meek, Jon Timothy, Lawrenceville New Jersey 08648 (US); Stockton, Gerald William, Morrisville Pennsylvania 19067 (US)
(74) Representative: Wächtershäuser, Günter, Prof. Dr.

(56) References cited:
- EP-A- 0 162 649
- FR-A- 2 316 721
- US-A- 3 937 955
- US-A- 4 535 235
- ANALYTICAL CHEMISTRY, vol. 52, no. 3, March 1980, pages 463-468, American Chemical Society, Columbus, Ohio, US; E.B. LEDFORD et al.: "Exact mass measurement by Fourier Transform mass spectrometry"

## Description

This invention relates to mass spectroscopy in general, and more particularly to an improved method and apparatus for carrying out ion cyclotron resonance spectroscopy.

High resolution mass spectrometry (MS) is used widely in chemistry for the elucidation of molecular structures and the study of numerous chemical and physical processes. A knowledge of an accurate mass measurement for an unknown molecule enables the chemist to reduce the number of possible structures to a short list. The resolution and mass-accuracy achievable with the most powerful of the commercial high resolution spectrometers does not yet eliminate entirely the need for interpretation of the spectrum and intuitive deduction by tne chemist in arriving at a probable structure for a compound. Definitive structures for even moderately large molecules are rarely achieved and other forms of spectroscopy are usually needed to supplement the information obtained. The rate of advancement of the traditional scanning magnetic sector mass spectrometer has slowed due to technological limitations in magnet stability and the optical slits, and no dramatic improvements in resolution and mass-accuracy seem likely in the foreseeable future. Also, the recent improvements in chromatographic technology have surpassed the ability of the scanning magnetic sector instruments to obtain a spectrum in the time available (i.e. within the chromatographic peak width).

It has been recognized that ion cyclotron resonance (ICR) offers the greatest opportunity for major advances in the art of high resolution mass spectrometry. This is discussed by C.L. Wilkins and M.L. Gross in Analyl. Chem. 53, 1661-1668 (1981). For example, while the magnetic sector instrument achieves a resolution of ten thousand and a mass accuracy of 10 to 15 ppm in routine experiments ICR spectrometers commonly achieve a resolution exceeding one million and mass accuracies under 1 ppm. With this level of performance, completely unambiguous structure-determinations (excluding isomeric forms) should be possible for quite large molecules. In tne ICR experiment, the ions are trapped by an applied electrostatic field and forced to undergo orbital (cyclotron and magnetron) motions at characteristic frequencies by the presence of a strong, uniform magnetic field.

The observable electrical signal arising from the motions of an ensemble of trapped ions of a single mass would be an exponentially-decaying sine wave (the rate of decay is determined by the frequency of collision between ionic and neutral molecules). For several different ionic masses, the ionic motions are reflected in a complex fluctuating signal made up of interferring sine waves of different frequencies and phases. This time-domain transient signal is often called an "interferogram" or simply a "transient." The individual frequency components of the interferogram are rendered observable by Fourier transformation, which is facilitated by digitizing the interferogram and storing its discrete binary representation in the memory of a digital computer where it can be processed numerically.

The exact mass measurement by Fourier Transform mass spectrometry has been described by E. B. Ledford et al. in Analytical Chemistry, vol. 52, no. 3, March 1980, pages 463-468. This publication relates only to the ICR cell itself, wherein the ions are generated and detected in the same region of physical space.

For a given mass observation range, the resolution and accuracy obtainable in the ICR experiment are limited by different factors, depending on the nature of the sample. In experiments with solid samples of low vapour pressure, the mass resolution is limited by the size of the digital memory available for storage of the interferogram, whereas, with chromatographic sources, the resolution is limited by tne quality of the vacuum attainable in the mass analyzer. In either case, the accuracy of the measured masses is limited by the accuracy of the calibration function.

The two commercial ICR mass spectrometers available currently have several limitations. Routine use of gas and liquid chromatographic interfaces and a variety of modern ionization techniques are beyond the capability of the commecial ICR instruments. In these spectrometers, for instance in the spectro meter described in the above cited article in Analytical Chemistry, the ions are formed and mass-analyzed in the same region of physical space -- inside a trapping cell 19 of 16,4 cm³ (one cubic inch) in volume. Mass resolution in the ICR experiment increases with decreasing pressure and significant gains in performance are achieved only at working pressures of 1,33 · 10⁻⁸mbar (10⁻⁸ torr) or lower. The prior art instruments were designed with a fundamental limitation which renders them unsuitable for use with chromatographic-sample sources: it is impossible to inject a liquid or gaseous stream at near-atmospheric pressure into the ICR cell and maintain a satisfactory operating pressure for high resolution mass measurements. Consequently, applications of these instruments have so far been restricted in scope to solid-probe experiments.

In order to accommodate chromatographic sources, it is apparent that the ion source and detection regions must be spatially separated and differentially pumped to achieve the required ultra-high vacuum in the analyzer region. If satisfactory differential pumping can be achieved, the problem is reduced to one of transporting the ions to, and trapping them in, the ICR mass-analyzer cell.

The method (Claim 11) and apparatus (Claim 1) of the present invention provides mechanical and electronic means to separate spatially the sample-introduction and ionization steps from the mass analysis step, thereby facilitating the interfacing of gas and liquid chromatographic sample-sources and implementation of several modern ionization techniques, and includes electronic means to improve the dynamic range, resolution, accuracy, and speed of the ionic mass measurement. The major improvement over prior art mass spectrometers arises in the use of electrostatic lenses for the transportation of ions from the sample-injection/ion-source region and that of the mass analyzer.

The dependent claims describe particular embodiments of the invention.

Alternative means to separate the ion source and mass analyzer in an ICR mass spectrometer have been discussed by others. In particular, Smith and Futrell, Int. J. Mass. Spectrom. Ion Physics 14, [11-18] (1984) used an 180 degree magnetic sector to guide ions from the source to tne ICR analyzer. Their apparatus is placed between the pole caps of a low-field electromagnet, but the geometry of the magnetic sector is not appropriate for use with higher field superconducting solenoid magnets. For a cryogenic magnet, McIver et al. in 32nd Annual Conference on Mass Spectrometry and Allied Topics, San Antonio, Texas (1984) proposed a radio frequency (RF) quadrupolar electric field to guide the ions from the ion source to the analyzer region, requiring the use of extremely long quadrupole rods (about 1m (meter) long).

There are several fundamental reasons why electrostatic lenses are preferred, and why the use of quadrupole rods imposes unnecessary limitations on the performance of the spectrometer. The system of electrostatic lenses described herein produces a tightly collimated ion beam focused along the principal axis of the magnetic field, which provides the most direct trajectory. The trajectory of an ion within an RF quadrupolar field is circuitous and the longer path length increases the probability of reactive collisions. The ions leaving the quadrupole rods have high velocities and widely diverging trajectories, making trapping in the ICR cell difficult at best. The transmission of high masses by quadrupole rods is inefficient, and the introduction of velocity-components perpendicular to the magnetic field increases the probability of ions striking the rods and of magnetic reflection. Long quadrupole rods exhibit poor pumping conductance and RF leakage from the rods can interfere with the detection of the ICR image current. Also, they are difficult and expensive to manufacture.

In the present invention, a vacuum chamber comprising three differentially-pumped regions is used to contain a versatile inlet system and ion source, an ion-optics system for the transportation of ions to the analyzer region, and an ICR ultra-high-resolution mass-analyzer. The ICR cell is situated in the homogeneous field of a large-bore cryogenic superconducting magnet. The high magnetic field of the cryogenic magnet is desirable since resolution improves and the upper mass limit is extended with increasing field strength. Samples are introduced into an ion source in the first vacuum chamber at a pressure of < 1,33 · 10⁻³ mbar (10⁻³ torr), where they are volatilized and ionized by one of several methods: electron impact (EI), chemical ionization (CI), fast atom bombardment (FAB), or laser ionization (LI). Due to the solenoidal geometry of the cryogenic magnet, the ion source must be located about 1.5 m (meters) from the ICR cell, and a system of electrostatic lenses is used to transport the ions over this distance.

The ions are extracted from the source by an electrostatic lens and moved to the second, differentially-pumped chamber at a pressure of < 1.33 · 10⁻⁶ mbar (10⁻⁶ torr), where they enter a low resolution mass-filter (a short RF quadrupole operated usually in tne "RF only" mode, where it acts as a high-pass mass filter) to discriminate against unwanted low-mass ions (e.g. reagent or carrier gas ions), and to provide single ion monitoring capability. The mass filter can be disabled electronically in certain experiments, without degradation of transmission efficiency. The ions leaving the mass filter are accelerated and focused into a tightly collimated beam, which is steered by electrostatic deflector plates through the orifice between the second and third vacuum chambers. The ions entering the third vacuum region, at a pressure of < 1,33 · 10⁻⁹ mbar (10⁻⁹ torr), are refocused by an electrostatic retardation lens, wherein they are decelerated to almost thermal velocity prior to entering the ICR cell. This scheme produces a tightly collimated ion beam moving close to the Z-axis of the magnet to minimize Lorentz forces (the vector cross product between the velocity V and the magnetic field B) acting on the ions.

The initial acceleration of the ions in the inhomogeneous magnetic field and final deceleration in the homogeneous field are used to overcome the reflection phenomenon associated with charged particles moving in a magnetic field gradient (See the Jackson text cited below). Magnetic reflection occurs when the ratio of the perpendicular to the parallel components of the velocity exceeds a threshhold value. Since the perpendicular (X and Y) components of the velocity are determined by the thermal energy of the ions, magnetic reflection can be overcome simply by making the Z-component of the velocity sufficiently large. However, high velocity ions are not easily trapped in the ICR cell and a retardation lens must be provided to decelerate the ions as they enter the homogeneous region of the field.

When a potential difference (trapping voltage) is applied between the side and end plates of the ICR cell, packets of ions can be confined within the volume of the cell. At pressures less than 1,33 · 10⁻⁹ mbar (10⁻⁹ torr), ions can be trapped for periods of several minutes. The ions are detected through observation of the image current induced in the side plates of the ICR cell. This current is amplified, digitized, and stored in the memory of a digital computer. Post-acquisition Fourier transformation renders the frequencies, and hence the accurate masses, measurable simultaneously for many different ions.

In the Fourier transform experiment, the need to generate a discrete digital representation of the measured signal causes limitations in dynamic range (the ratio of the largest to the smallest signal that can be represented numerically), in resolution, and in mass accuracy. In ICR experiments using chromatographic sources, the required dynamic range can exceed one million. Available analog-to-digital converters of sufficient speed limit the dynamic range to a few thousand. Therefore, electronic circuitry was devised to overcome this limitation and expand the dynamic range to the natural limits imposed by physics of the ion trap. The discrete representation of the ICR signal causes difficulty in measuring the exact mass because the frequency corresponding to a given mass may fall between two data points. This problem can be minimized by the use of a very large digital memory, and interpolation algorithms to calculate the accurate mass. Ordinary solid-state memory is too slow for high speed acquisitions into large tables and a special ultra-fast partitionable buffer memory (200 MB/sec burst rate, 4 MB capacity) was incorporated in the apparatus. The provision of arithmetic logic circuitry in the buffer memory allowed signal averaging for noise reduction.

The illustrated embodiment of the Fourier transform ICR spectrometer described herein provides the benefits of solid probe, as well as gas and liquid chromatographic inlets, while providing extremely high resolution and mass accuracy possible only with the ICR method of mass analysis. Furthermore, with the inclusion of several volatilization and ionization methods (EI, CI, FAB and LI), and novel electronic means to improve digital resolution and dynamic range, this invention constitutes an advance in the technology of mass spectroscopy, as well as ion cyclotron resonance spectroscopy, and satisfies a need which exists in the art.

FIG. 1 is a schematic illustration of an ion cyclotron resonance (ICR) detection cell.

FIG. 2 is a computer simulation of the trajectory of an ion of mass 100u (amu ; 100 amu = 1.66 x 10⁻²⁵ kg) guided by a radio frequency quadrupolar electric field into the bore of 7 T (Tesla) superconducting solenoidal magnet, shown in a three-dimensional view.

FIG. 3 is a computer simulation of the trajectory of an ion of mass 100u (amu) moving into the bore of a 7 T (Tesla) superconducting solenoidal magnet.

FIG. 4 illustrates typical configurations for electrostatic lenses: A) a three-element aperture lens; and B) a three-element cylinder lens.

FIG. 5 is computer simulations of ion trajectories through a three-element electrostatic cylinder lens in the absence of a magnetic field, shown in a three-dimensional cut-away view.

FIG. 6 is computer simulations of ion trajectories through a three-element electrostatic cylinder lens in the presence of a magnetic field gradient increasing in the positive z-direction, shown in a three-dimensional cut-away view.

FIG. 7 is a schematic illustration of one embodiment of the Fourier transform ion cyclotron resonance mass spectrometer, shown in a cross-sectional view.

FIG. 8 is a schematic illustration of the sample inlet and ionization system.

FIG. 9 is a block diagram of the interconnection of essential electronic components in the illustrated embodiment of the inventive apparatus.

FIG. 10 is a diagram illustrating the timing of various events in the ion-trapping, excitation and acquisition sequence of a typical Fourier transform ion cyclotron resonance experiment. Representative durations for each of the events are given in the right-hand column.

FIG. 11 is a block diagram for an automatic gain control (AGC) amplifier with a digital gain control element.

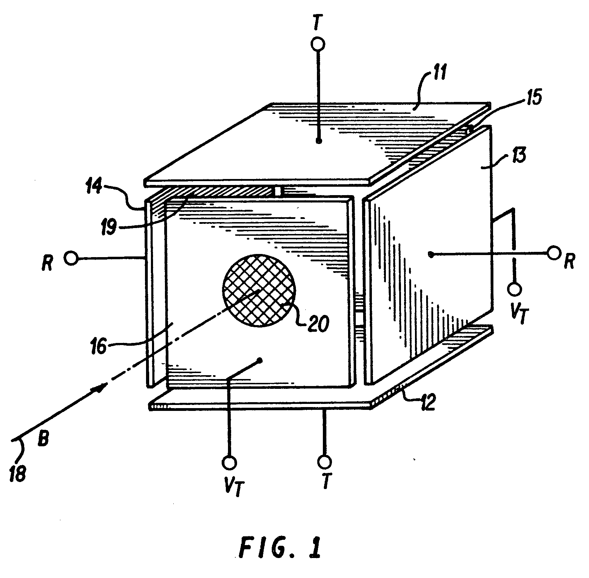

An illustration of an ICR trapping cell is shown in FIG. 1. Illustrated are six plates, 11-16, arranged in pairs to form a cubical space comprising a trapping cell 19. Potentials are applied across the pairs of plates and a magnetic field B is provided in the directions of arrow 18. The static electrical potentials applied to the walls of the cell, in combination with the applied magnetic field, create forces which restrict the ion motions to the interior of the cell. The orbital motions of the ions can be accelerated to larger radii by the application of a radio frequency oscillating electric field, and these motions can be detected by the observation of electric currents ("image" currents) induced in the walls of the cell. For an ion of mass m and charge q, entering the cubical space through a screen 20 and moving in a magnetic field B, the cyclotron motion occurs at an angular frequency, approximated by the sample formula:ω=qB/m (note that there exists a more exact relation containing higher-order terms, which arise from the presence of the trapping fields and space-charged effects). Thus, the ionic mass can be deduced by measuring the cyclotron frequency. Furthermore, many different masses can be measured simultaneously using Fourier transform techniques.

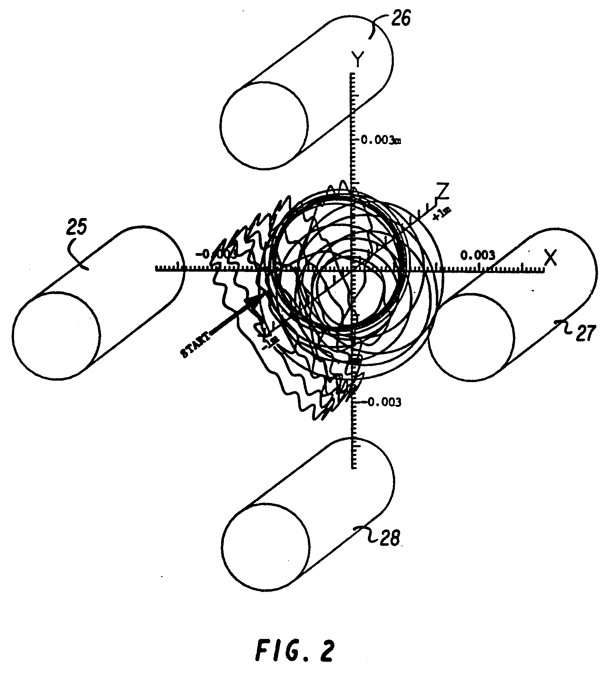

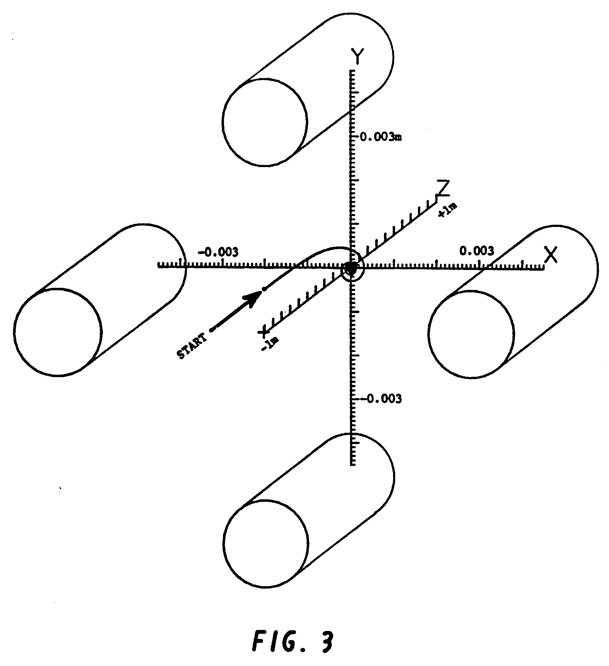

To demonstrate these advantages of electrostatic lenses, computer simulations of ion trajectories are presented in FIGS. 2 and 3. FIG. 2 illustrates the trajectory of an ion injected into a radio frequency quadrupolar electric field generated by rods 25-28 at a distance of one meter from the center of a 7 T (Tesla) superconducting magnet. The principal axis of the magnetic field is along the z-direction of the reference frame and the field strength is maximum at position (0,0,0). The initial position of the ion is at X=0, Y=0.001, Z=1 m, and the ion moves in the positive z-direction. The quadrupole rods end at Z=0. The scale of the illustration is distorted to show sufficient detail. At this initial position, the magnetic field is weak and the ion is forced to undergo a complex oscillatory motion due to its interaction with the fluctuating electric field. As the ion moves to stronger magnetic field strengths, its motion becomes orbital due to the domination of the magnetic interactions over the electric interactions. If the frequency of the electric field is near a harmonic of the cyclotron frequency for the ion, the ion will be accelerated into a larger orbit and may collide with the quadrupole rods or be reflected away from the magnet. The initial velocity of the ion, its mass/charge ratio, the peak-to-peak voltage on tne quadrupole rods, and its position in the magnetic field all affect the trajectory of the ion.

FIG. 3 illustrates a computer simulation of the trajectory of an identical ion (same initial velocity, and position) moving parallel to the principal axis of a static magnetic field, with the quadrupolar electric field turned off. The quadrupole rods, shown for comparison with FIG. 2, are inoperative. The principal axis of the magnetic field is along the z-direction of the reference frame and the field strength is maximum at position (0,0,0). The initial position of the ion is at X=0, Y=0.001, Z=1 m, and the ion moves in the positive z-direction. The scale of the illustration is distorted to show sufficient detail. Clearly, the generation of the collimated ion-beam accelerated along the principal axis of the magnetic field will provide a more direct and controllable pathway to the mass-analyzer. In these simulations, the magnetic field was approximated by numerical integration of the Biot-Savart equation (J.D. Jackson, Classical Electrodynamics, John Wiley & Sons, Inc., NY, 1975), and the quadrupolar electric field was calculated exactly.

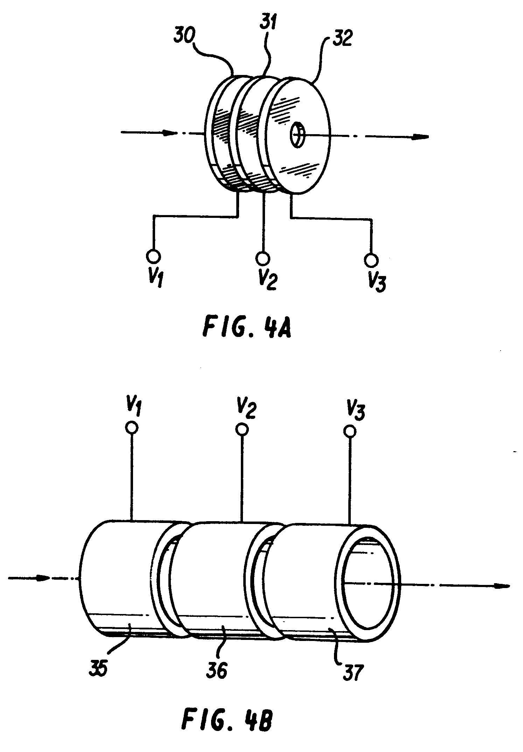

Examples of electrostatic lenses are shown in FIGS. 4A and B, wherein a three-element aperture (disc) lens made up of discs 30-32 and three-element cylinder lens are illustrated. More complex lenses can be constructed with additional elements. Adjustable electrical potentials V₁, V₂ and V₃ are applied to the individual lens elements to determine the optical characteristics. Depending upon the physical geometry of the lens elements and the values of the electrical potentials applied to each element, electrostatic lenses V₁, V₂ and V₃ will mimic a variety of optical lenses in their ability to focus diverging beams. Moreover, they can be made to accelerate, decelerate, or leave unchanged the velocity of an ion beam. The special case where the potentials on the outer elements, e.g., 30 and 32 or 35 and 37 are equal and the central element is held at a different potential is called an "einzel" lens. A detailed treatment of the design of electrostatic lenses is given in E. Harting and F.H. Read, Electrostatic Lenses, Elsevier Scientific Publishing Company, New York, 1976, although cases where magnetic fields are present are not discussed. In the present work, the optical properties of a three-element einzel cylinder lens are calculated by numerical solution of the electrostatic boundary-value problem where the electric field obtains by differentiation of the computed potentials and the magnetic field is calculated as discussed previously.

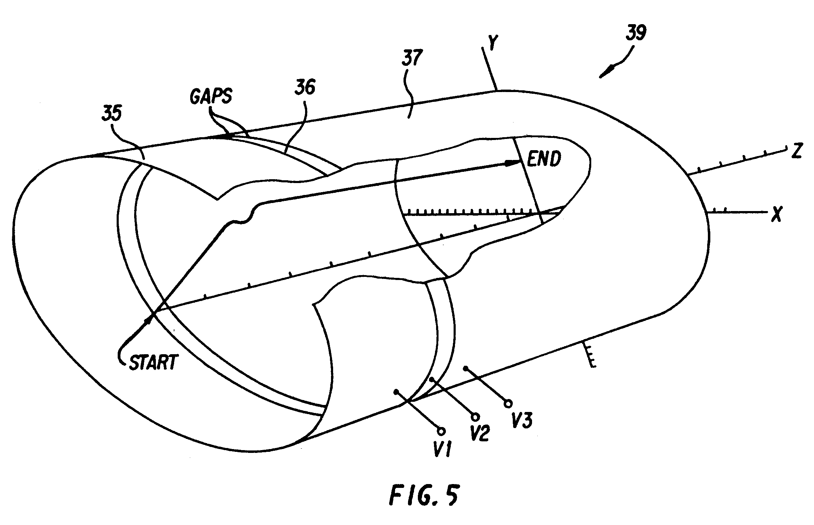

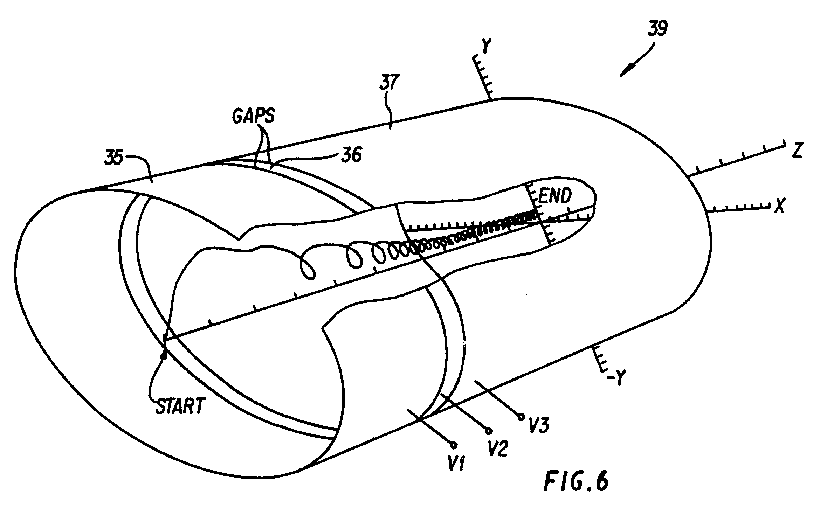

The trajectory of an ion beam through an einzel lens 39 is modified by the presence of a static magnetic field, as shown in FIGS. 5 and 6. Computer-simulated trajectories respectively in the absence and presence of a magnetic field are calculated for ions of mass 100 with a total energy of 40 eV. The outer elements of the lens are held at the potential of the beam (V1 = V3 = 40 V) and the potential V2 of the central element is -84 V. Note that the scale is distorted to show sufficient detail: the cylinder is 1 m long by 3.8 cm diameter and the gaps between the cylinders are 3.8 mm. The initial position and trajectory of the ion beam is indicated by the arrow labeled "START.." In Fig. 5, the ion beam has initially a large radial component of velocity which is removed by its interaction with the inhomogeneous electric field within the lens.

In Fig. 6, with a magnet field applied,although the entering ion beam has substantial radial velocity, the electrostatic lens yields an emerging ray moving parallel to the z-axis, even though a small cyclotron motion is present. These simulations show that satisfactory optical properties can still be achieved in the presence of a strong axial magnetic field gradient, even though the ions undergo cyclotron motion about a small radius. The ions are not accelerated to large cyclotron orbits by the electrostatic lens, in constrast to their behaviour in an RF quadrupolar field, which is shown in FIG. 2.

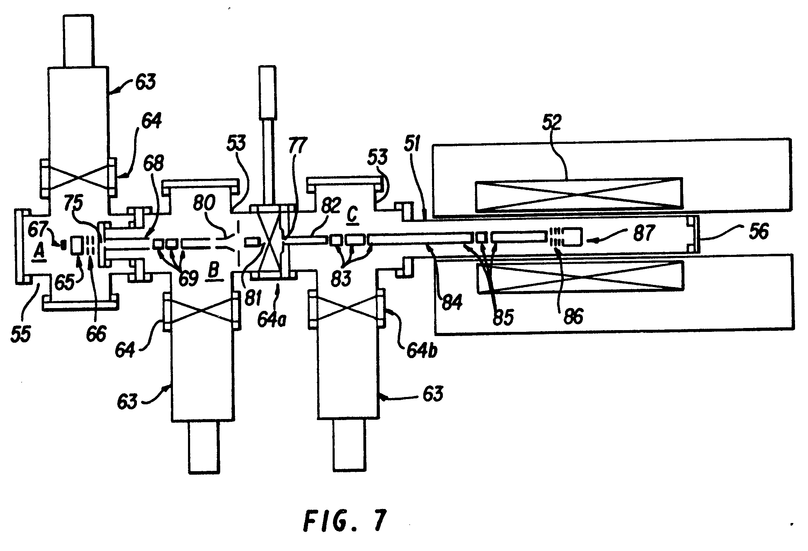

The Fourier transform ion cyclotron resonance mass spectrometer of the present invention is housed within a three-stage, differentially-pumped vacuum chamber, as shown in FIG. 7. Most of the vacuum-housing components were supplied by NOR-CAL Products Inc. The stainless-steel vacuum housing, 51, is assembled using three six-way tubular crosses 53 equipped with high-vacuum flanges and crushed-metal seals, and separated by 20,3 cm (8˝) dia. tubular sections. A long tubular section 56 of the vacuum housing with a diameter of 12,7 cm (5˝) is inserted into the 15,2 cm (6˝) dia. bore of a cryogenic superconducting magnet (Oxford Instruments Inc. model 300/150 horizontal magnet equipped with a full set of cryogenic shim coils) 52, operating at a field strength of 7 Tesla (although other field strengths can be used also). The three regions of the vacuum chamber, A, B and C, are differentially pumped by three cryogenic vacuum pumps, 63 (CTI Cryogenics model CT-8). Cryogenic pumps were selected because of their ability to operate in a magnetic field (unlike turbo-molecular pumps), high pumping speeds, low ultimate pressures, complete absence of contaminating materials such as pump oils, and their ability to cope with a high throughput of chromatographic gases and solvents. The roughing-pump system comprising venturi and sorption pumps is not shown in FIG. 7. Each of the three vacuum pumps can be isolated from the vacuum housing 1, by an associated gate valve 64 (VAT Inc. ultra-high vacuum valves series 10, 200 mm). Also, the ultra-high vacuum chamber, region C, can be isolated from tne rest of the system by a gate valve 64a.

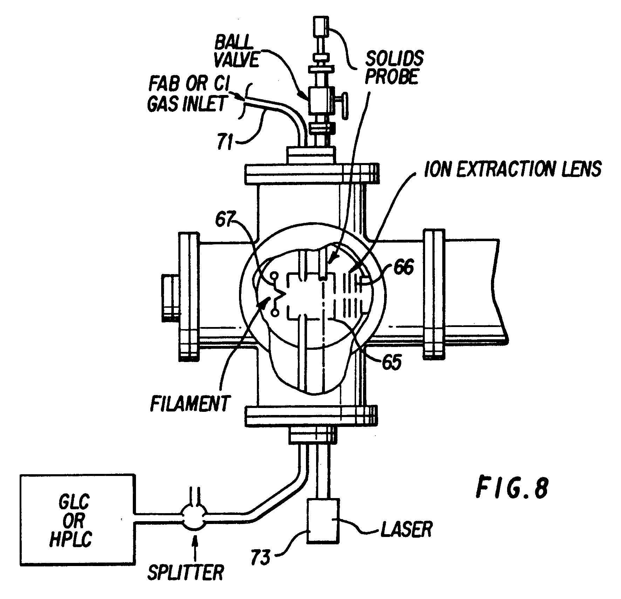

The sample inlets (not shown in FIG. 7) for solid probe and chromatographic interfaces supply vaporized neutral molecules to the ion source 65, wherein the molecules are ionized either directly by an electron beam from the filament 67, (EI) or indirectly by chemical ionization (CI) using reagent-gas ions fed through inlet 71, or by a laser beam (LI) from Laser 73 or by fast-atom bombardment (FAB) tnrough inlet 71, as illustrated by the sketch in FIG. 8. Separate interchangeable ion sources were constructed or purchased for each of these ionization schemes. For example, a combined EI/CI ion source was constructed by modification of an Extranuclear Laboratories model E2-1000 ion source, wnerein the radial electron beam was changed to an axial beam by relocation of the filament and repeller plate, and an aperture was made in the removable ion-volume cup to permit entry of the axial beam. Note that not all of the components shown are connected or used in the spectrometer at the same time. Interchangeable ion sources are used to provide versatility in sample introduction and ionization.

Referring to FIG. 7, the ion extraction lens 66, transports the ions from the first vacuum chamber to the second, wherein the ions enter a low-resolution mass filter 68 (a short RF quadrupole), to remove undesired low-mass ions such as carrier gas and solvent ions from the chromatographs, or chemical ionization reagent gas ions. The presence of these low-mass ions would increase the space charge in the ICR mass-analyzer, which would degrade resolution and cause the measured cyclotron frequency to shift. In the illustrated embodiment, The Extranuclear Laboratories model 7-162-8 quadrupole rods are equipped with ELFS on both ends (ELFS = Extranuclear Laboratories Field Separator, a leaky-dielectric device which causes gradual decay of the RF electric field near the rod-ends and complete blockage of DC electric fields, thereby collimating the emerging ions). The quadrupole filter is usually operated in the RF-only mode where it acts as a high-pass filter, although the RF/DC band-pass mode is available if needed for selective ion transmission. The quadrupole can also be disabled electronically for certain applications. It is noteworthy that the quadrupole filter is situated in a weak region (<0.001 T (Tesla)) of the magnetic field, and that the ion trajectories are virtually unaffected by such a weak field.

A small orifice 75 between the extraction lens 66, and the filter 68, supports the pressure differential between the chambers A and B. An electrostatic three-element cylinder lens 69 provides focussing of the ion beam emerging from the quadrupole rods. Electrostatic steering plates 80 and 81 provide horizontal and vertical deflection of the beam, respectively, to maintain the position of the beam close to the principal axis of the magnetic field and to direct the beam through a second orifice 77 which supports the pressure-differential between the second and third vacuum chambers B and C.

A grid tube 82 provides an equipotential flight path for the ion beam. It is a cylinder of fine wire mesh held at the electrical potential of the ion beam. Its function is to shield the beam from the influence of stray electric fields, such as those arising from the vacuum housing at ground potential, and provides lower restriction to pumping than could be achieved with a solid tube. A pair of electrostatic three-element cylinder lenses 83 and 85 sharing a common element in a second equipotential grid tube 84, provide additional acceleration and focussing of the ion beam to transport the ions over a distance of one meter in vacuum region C, against a large magnetic field gradient. A three-element aperture deceleration lens 86 slows the beam to almost thermal velocity prior to entering the ion trapping cell 87. The ICR cell 87 comprises six electrically-isolated metal plates forming the sides of a box, with attached wiring to supply adjustable DC voltages to the plates and to conduct the excitation and response signals. (See Fig. 1) The various electrical connections to the mass spectrometer are brought into the vacuum housing by ceramic high-vacuum feedthroughs (supplied by Ceramaseal Inc.).

When the ions are present in the ICR cell 87, the voltage on the end plates 15 and 16 is raised to about 1 Volt to prevent escape of the ions in the z-direction. The magnetic and electric fields induce cyclotron and magnetron motions, which prevent loss of ions in the X-Y plane. Thus, the ions are effectively trapped within the volume of tne ICR cell 87, where they can be observed over relatively long periods of time. The ICR cell is supplied optionally with positive or negative direct (DC) voltages for trapping positive or negative ions, and a pulsed alternating voltage for the excitation of the ions. The so-called "CHIRP" excitation is a radio-frequency pulse in which the frequency is swept rapidly during the pulse over a range sufficient to excite the mass-range of interest. Excitation corresponds to acceleration of the ionic motions to larger radii. The amplitude and duration of the CHIRP pulse determine the radii of the "parking orbits", the orbits in which the coherent ion motions are observed. The ionic motions induce a minute fluctuating electric current (the "image" current, see Wilkins et al. and Smith et al. supra) to flow between the opposing side plates of the cell and through external electronic circuitry in which the current is amplified and detected. The amplified image current is digitized and stored in the memory of a digital computer, where the time-domain transient signal is Fourier transformed to reveal the characteristic cyclotron frequencies and the accurate masses of the ions.

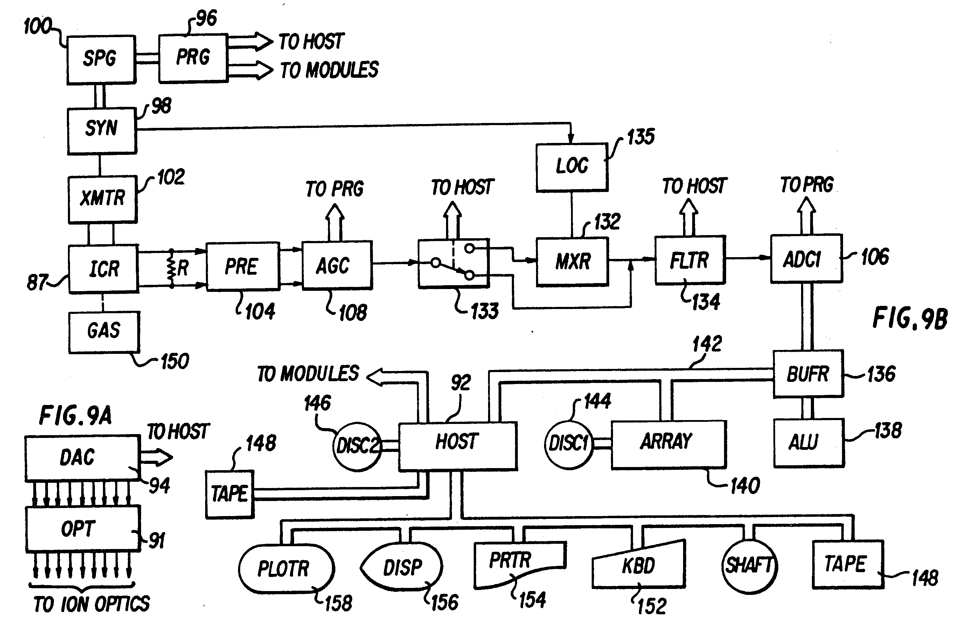

The electronic circuitry in the spectrometer can be subdivided into the categories of ion-optics and chromatograph controllers, excitation circuitry, detection circuitry, and digital processing equipment. The organization of the analog and ditgital circuitry is illustrated by the block diagram in FIG. 9. The ion source controller is an Extranuclear Laboratories model G50-IC Ionizer Controller and the quadrupole mass filter is regulated by a model C50-MS Mass Command Electronics from the same vendor. The ion optics controllers 91 are highly stable programmable DC power supplies that supply voltages to the individual elements of the various electrostatic lenses, and to the walls of the ICR cell 87. These voltages are controlled by a host computer 92 through an array of thirty-two 12-bit digital-to-analog converters 94 (Micro Networks Inc. model DAC-HK2). The DAC 94 outputs are amplified by high voltage operational amplifiers (Apex Microtechnology model PA08) to supply programmable voltages ranging between -140 V and +140 V (volts). The individual lens voitages can be adjusted manually (to optimize ion transmission) by rotation of a digital shaft encoder (Litton Industries model 81 BI-256-5-1), or alternatively under the control of the host computer 92 using a simplex-optimization program.

In the illustrated embodiment, the host computer 92 is a MOTOROLA BENCHMARK-20™ 32-bit desk top computer based upon the MC68020 microprocessor and the MOTOROLA VERSAbus™ digital bus protocol. The spectrometer control software was written in PASCAL and MOTOROLA 68020 assembly language, using the VERSAdos™ real-time disc-operating system.

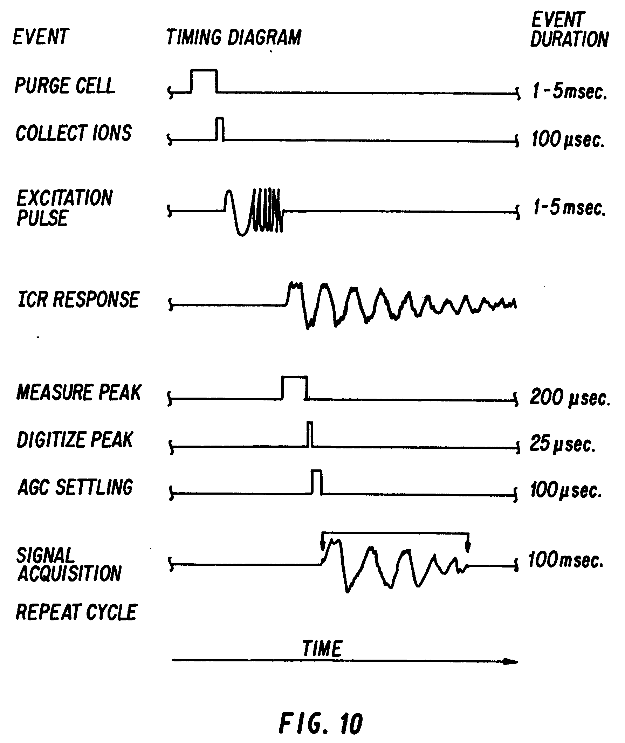

The timing of various events in the spectrometer is determined by a programmable pulse generator 96, constructed using timers and counters available on standard large-scale integrated circuits. The pulse programmer is initialized by software in the host computer 92, and its carefully-timed output pulses are used to trigger several other electronic modules. A timing diagram for a typical FT-ICR experiment is shown in FIG. 10. The CHIRP excitation pulse originates in a digital frequency synthesizer 98 (Rockland model 5100), which can be swept at a predetermined rate between accurately known frequency limits, and programmed in amplitude, using the synthesizer programmer 100 [SPG]. The synthesizer programmer 100, fabricated from standard integrated circuits, is in turn controlled by the host computer 92, which sets the operating parameters for the experiment, and is triggered by the pulse programmer 96. The CHIRP pulse is applied to a differential RF transmitter 102, which is connected to two of the opposing side plates of the ICR cell 87. The oscillating electric field produced by the CHIRP voltage accelerates ions of a given mass into coherent orbital motion, which can be detected by the image current induced in the side plates of the cell.

The image current to be measured is very small, typically 10⁻¹²A (Amps), and the detection circuitry includes a resistance R through which the image current flows. Since the ICR cell 87 represents a high-impedance, mostly capacitive signal-source, the value of the resistance R must be very large (108MΩ (Megohms)) to avoid loading the source. The capacitance C of the ICR cell is small (typically 0.2-0.5 pF) and the cutoff frequency of tnis RC circuit must be low enough to allow passage of the frequencies corresponding to the mass range of interest. The small voltage (typically 10⁻⁴ V (volts)) developed across the load resistance R is amplified by a differential pre-amplifier 104, which must have an extremely large input impedance, a low input capacitance, a low noise-figure and a wide band-width. A suitable field-effect transistor pre-amplifier was constructed with a gain of 300, a bandwidth of 1 kHz to 5 MHz, input capacitance of 0.25 pF, and impedance of 10⁸Ω(Ohms). Further amplification takes place in subsequent gain stages, as discussed below.

Typical mass spectra contain a large range of peak-amplitudes, and chromatographic sources supply widely-varying sample sizes to the ion source. Thus, the ICR signal strength for a given ion can vary as much as one million fold. This imposes the requirement of an exceedingly large dynamic range on the main signal digitizer 106. At the required digitization rate of 5 MHz, the fast digitizers available currently are limited to a resolution of 12 bits at most, which corresponds to a dynamic range of only 4096:1. Consequently, a provision for controlled signal compression in the amplification chain is needed to increase the effective dynamic range of the digitization process. In the apparatus of the present invention, signal compression is achieved by means of a novel circuit for an automatic gain control amplifier 108, which ensures that the signal presented to the main digitizer 106 has ostensibly constant peak amplitude regardless of the number and type of ions in the ICF trapping cell (within certain practical limits), and that the dynamic range of the digitization process is maximized. To formulate this process algebraically, if the timing-varying ICR signal is designated V(t) and its initial peak-to-peak amplitude is Vpp, a constant peak amplitude Vₖ is obtained by multiplying V(t) by a factor Fₛ = Vₖ/Vpp. Thus, a measurement of 1/Vpp is required.

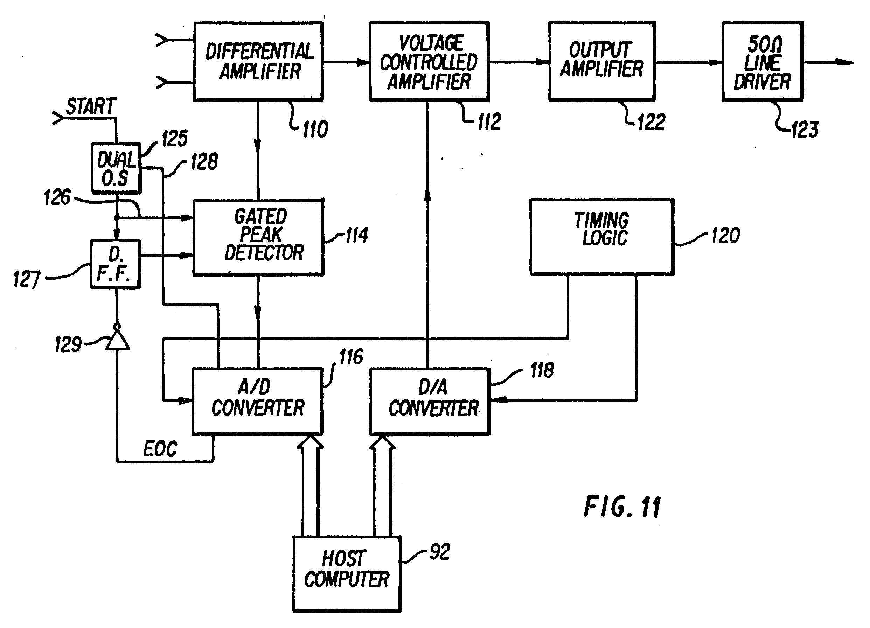

In the illustrated embodiment, an innovative automatic gain control circuit 108 incorporating a digital gain control element was designed and constructed. This module is shown as a functional block diagram in FIG. 11. This circuit contains a 20 dB signal amplifier 110 with differential inputs and outputs. One output is routed to a voltage controlled amplifier 112, and the other to a fast gated peak detector 114. Other circuit elements include a 12-bit analog-to-digital converter 116, a 12-bit digital-to-analog converter 118, TTL timing logic 120, and a signal output-amplifier 122.

The gain of the VCA 112 must be adjustable over a range of at least 1000 by application of a DC control voltage. Moreover, the gain of the VCA 112 must be highly linear over the range of the applied control voltage, which is not the case for a large class of monolithic AGC amplifiers used commonly in radio frequency circuits. Consequently, a true four-quadrant multiplier (MOTOROLA integrated circuit MC1594) was selected for the VCA function, providing a linear gain range of ca. 80 dB. The fast gated peak-detector 114 is also based on a monolithic integrated circuit, a Precision Monolithics Inc. PKD-01 configured for bipolar signals. This circuit produces a DC output voltage equal to the peak-to-peak amplitude of the alternating input signal. Provided that a small DC offset (ca. 100 mV) is applied to the input to ensure that the internal diodes always conduct, this peak detector has adequate linearity over the required range of RF signals.

In AGC operation, the peak detector 114 is gated on for 200 µs (microseconds) by the timing logic 120, immediately after the CHIRP excitation pulse ends. During this sampling period, the initial peak-to-peak amplitude of the transient ICR signal is measured, as indicated in timing diagram in FIG. 10. The proportional DC output voltage of the peak detector cannot be used directly to set the gain of the VCA 112 because of its small-but-significant drift during the period of the data acquisition. Also, the required DC control voltage is inversely proportional to the peak amplitude and a divider circuit must be inserted between the gated peak detector 114 and the VCA 112. While in principle this could be done with analog circuit elements, it is more convenient and accurate to use digital circuitry. The DC output of gated peak detector 114 is digitized by the analog-to-digital converter 116 (Micro Networks Inc. integrated circuit ADC-80) in about 25 µs (microseconds) and the 12-bit binary representation of the peak amplitude is transferred to the host computer 92 for processing. The numerical scaling factor Fₛ is evaluated by the computer and applied to the binary input of the 12-bit digital-to analog converter 118, a Micro Networks Inc. integrated circuit DAC-HK. The analog voltage generated by the DAC 118 is scaled to the range 0-1 V by a potentiometer and applied to the X-input of the four-quadrant multiplier used as VCA 112. The ICR signal from differential amplifier is applied to the Y-input of the multiplier, which is configured for an overall gain of 10. The constant peak-amplitude signal from the multiplier (VCA 112) is applied to the output amplifier 122 (gain 100) which provides its output to a 50 Ohm line driver 123 for transmission to subsequent circuits. The signal scaling factor Fₛ is stored along with each transient ICR signal in the host computer or on a magnetic disc, providing a means by which the true signal amplitudes can be restored during post-acquisition processing. Thus, accurate ion-chromatographs can still be generated.

The timing for the AGC operation is controlled by internal TTL logic circuitry comprising a dual one-shot multivibrator 125 (74LS221), a D-type flip-flop 127 and an inverter 129. A positive-edge logic transition provided by the pulse programmer 96 of FIG. 9 starts a 200 microsecond period output on line 126 of one shot 125 to define the peak detector sampling period. At the end of this period, a 100 ns (nanosecond) trigger pulse on line 128 is generated to start the analog-to-digital converter 116. The end-of-conversion pulse (EOC) from ADC 116 is used to initiate data transfer to the host computer 92 and to reset the peak detector 114 in preparation for the next transient. A logic pulse from the host computer 92 latches the digital-to-analog converter 118. The critical time interval between the end of the CHIRP pulse and the start of main signal acquisition remains under the control of the pulse programmer 96 to ensure coherent signal averaging.

Other advantages of the digital AGC circuit are apparent. For example, rather than using the simple scaling factor Fₛ as defined above, a calibration polynomial function or a look-up table can be used to correct any non-linearities in the analog circuitry. Also, since the gain of the amplifier is intrinsically under the control of the computer, automatic apodization of the transient signal can be done in real time.

Between the autoranging automatic gain control amplifier 108 and the main-signal digitizer 106, two additional circuits are inserted, as shown in FIG. 9. These circuits are a double balanced mixer 132, which can be switched into or out of the signal path by switch 133, and a programmable low-pass filter 134. Together, these provide operation of the spectrometer in a heterodyne or narrow-band mode. The ICR signal can be mixed (heterodyned) with a reference signal from a local oscillator 135 in order to narrow the bandwidth of the observed frequencies, and hence increase the mass resolution of the experiments. Heterodyning produces both sum and difference frequencies, and the sum components are largely removed by the low pass filter 134. The filter can also be used independently of the mixer to remove high frequency noise components from the ICR signal.

As mentioned above, the ICR apparatus utilizes a 12-bit analog-to-digital converter 106 (Analog Devices Inc. MOD-1205) operating at frequencies up to 5 MHz. The conventional laboratory computer 92 is incapable of accepting information acquired at this high speed, as well as performing numerous control and processing functions in the spectrometer. Consequently, a high-speed (200 MB/sec burst rate), partitionable buffer memory 136 with add/subtract arithmetic capability (provided by an arithmetic logic unit 138, [ALU]) is used to accept the digitized interferogram and provide signal-averaging capability. This fast signal-averager was constructed by modification of WideWord™ bulk memory module manufactured by DATARAM Inc. At least a megaword of 32-bit memory is needed to provide sufficient digital resolution for analytical ICR experiments. A one-megaword memory would limit the mass resolution to 21,000 a wide-range spectrum from mass 100 to 600u (Daltons or amu) with data acquisition at a frequency of 2 MHz. To achieve higher resolution would require operation in the heterodyne (mixer) mode.

The stringent data processing requirements of the experiment impose severe demands on the performance of the digital computer 92. The large data arrays must be Fourier transformed in a time on the order of one second, which is beyond the capability of the host computer. This short processing time is necessary to avoid loss of information from ephemeral chromatographic samples (capillary GC and microbore LC peaks have half widths of only a few seconds). Consequently, a pipelined vector arithmetic processor, also called an array processor, 190, must be used to achieve the required processing time. In the illustrated embodiment of the invention, the host computer 92, the buffer memory 136, and the array processor 92 (a fast vector arithmetic processor supplied by SKY Computers Inc.) share a common bus 142 (based on the MOTOROLA VERSAbus™ protocol) to maximize the data throughput rate.

The large data arrays acquired in these experiments require large mass-media storage. For example, a 500 MByte magnetic disc 144 used for storage of unprocessed ICR interferograms can be filled completely in single cnromatographic experiments. A smaller magnetic disc 146 provides storage for the frequency domain spectra because only information on ionic mass and amplitude need to be saved. Streaming magnetic tape 148 is used for archiving the spectra.

Ion-molecule reactions can be studied in the ICR cell by injecting a pulse of a collision gas. In the illustrates apparatus, this is achieved using a solenoidal pulsed gas valve 150, (Maxtec Inc. model MV-112 piezoelectric gas valve), which is actuated under the control of the pulse programmer 96. This valve 150 provides a momentary high pressure 1,33 · 10⁻³ mbar (10-³ torr) of a reagent gas during which the ion-molecule reactions take place. The valve can be opened for as little as 0.001 s, and the high vacuum is quickly restored by the cryo-pump for low-pressure observation of the ICR signal of the product ions.

The other modules shown in FIG. 9 require no discussion: the computer keyboard 152, the printer 154, the raster-scan graphics-display oscilloscope 156, and the digital plotter 158 are all standard commercial items used in conventional applications.

## Claims

1. A Fourier transform ion cyclotron resonance mass spectrometer, for measuring accurate masses of positively and negatively ionized molecules from a vaporized chemical sample comprising:
a) a vacuum housing (51) divided into first, second and third differentially-pumped vacuum regions (A, B, C), separated by apertures (75,77), in order of decreasing internal pressure;
b) means (65,67) to introduce, vaporize and ionize chemical materials in said first region of said vacuum housing (51);
c) means (66) to transport ions from said first region to said second region of said vacuum housing;
d) means (68) to produce a strong, homogeneous magnetic field having a principle axis lying within said third region of said vacuum housing and having an inhomogeneous region extending into said second region;
e) electrostatic lens means (69,83,85) to focus, accelerate and guide the ions along said principal axis of said magnetic field, in the inhomogeneous fringing region of the field, and through the aperture 77 separating said second and third regions of said vacuum housing (51);
f) means (86) to decelerate the ions to neat-thermal velocity in the homogeneous region of said magnetic field;
g) an ion cyclotron resonance mass analyzer cell (87) to trap the ions in a confined volume of space, situated in the third ultra-high vacuum chamber region (C) of said housing (51), in the homogeneous part of said strong magnetic field;
h) means (71) to introduce a pulsed reagent gas into said cell to induce reactive collisions;
i) means (11 to 16) for providing an oscillating electric field to accelerate the trapped ions into larger orbital radii, thereby creating observable coherent motions of the ions; and
j) means (108) to render observable the characteristic frequencies of the orbital motions of the trapped ions, whereby accurate ionic masses can be calculated.

2. A spectrometer according to Claim 1 and further including means (68) to remove unwanted ions from the ionized sample; and further including means to operate in a heterodyne or narrow-band mode to improve mass-resolution.

3. A spectrometer according to Claim 1, wherein said vacuum housing (51) characterizes three, six-way flanged tubular crosses, interconnected by tubular sections and separated by small orifices (75,77) into said first, second and third regions (A,B,C) and first, second and third cryogenic high-vacuum pumps (63), for pumping said first, second and third regions; wherein said means to introduce include means for the introduction and vaporization of solid chemical samples; wherein said means to introduce include means for the introduction of chemical samples dissolved in gas and liquid carriers originating in chromatographic separators, and means (67) to ionize said sample molecules; wherein said means (66) to transport comprises a three-element electrostatic aperture lens (66) for the extraction of ions from said means (65,67) to introduce, vaporize and ionize; wherein said means (68) to remove comprise a low-resolution mass filter, comprising short electric-quadrupole rods equipped with leaky-dielectric field separators on both ends, to eliminate unwanted low-mass ions and to provide single-ion transmission selectively; wherein said means (69,83,85) to focus, accelerate and guide comprise an electrostatic three-element cylinder lens (69) focussing the ion beam emerging from said quadrupole rods, and two pairs of electrostatic deflection plates, (80,81) oriented horizontally and vertically to guide the ion beam through the aperture between said second and third regions of the vacuum housing.

4. Apparatus according to Claim 3, wherein said means (69,83,85) to focus accelerate and guide further include a pair of three-element electrostatic cylinder lenses (83,85), which accelerate and focus the ions emerging from the aperture (77) between said second and third regions into a tightly-collimated beam to transport the ions through said third region (C) of the vacuum housing (51), wherein the ions gain sufficient velocity along the principal axis of the magnetic field to overcome certain natural repulsive forces arising from their motion along a magnetic field gradient; wherein said means (86) to decelerate comprise an electrostatic three-element aperture retardation lens, located in front of said cell, to decelerate the ions to thermal velocity prior to entering the cell, whereby efficient ion trapping is facilitated; wherein said ion cyclotron resonanace mass analyzer cell (87) comprises six electrically-isolated metal plates (11 to 16) forming a box and situated in said third ultra-high vacuum chamber region (C) of the apparatus, and inserted into the homogeneous part of said strong magnetic field, trapping the ions within the confines of the cell, due to forces originating in electric and magnetic fields, whereby the presence, abundance, and-masses of the trapped ions may be determined; and wherein said means to render observable includes a variable-gain electronic amplification circuit (108) with a digital gain-control element for the detection of the ICR image current, said circuit providing automatic regulation of the amplitude of the signal, said circuit operating such that the signal amplitude is first measured in a short time interval and the gain of the amplifier is set proportionately and held constant during a longer signal-acquisition period, so that the output signal of the circuit has ostensibly the same amplitude, regardless of the abundance of ions trapped in the cell whereby the range of measurable signal amplitudes in chromatographic mass spectrometric experiments is improved.

5. Apparatus according to Claim 4 and further including a local oscillator (135) and means (132) for mixing the ICR signal with an alternating voltage supplied by said local oscillator, thereby narrowing the observed mass-range and providing improved resolution and mass accuracy.

6. Apparatus according to Claim 4 with means (116) to digitize said ICR signal and further including means (136,138) for storage and numerical signal-averaging of the digitized ICR mass spectral signals in exceptionally large data arrays, including a partitionable ultra-high-speed buffer memory (136) and arithmetic-logic circuiry (138), whereby the resolution and mass-accuracy obtained in the mass spectral measurements are increased.

7. Apparatus according to Claim 6, and further including a digital vector arithmetic processor (190), programmed to provide ultra-high-speed Fourier transformation and other mathematical operations, whereby exceptionally large data arrays can be acquired and processed in a time-period compatible with ephemeral chromatographic sample-sources and rapid-vaporization direction-insertion probes.

8. Apparatus according to claim 1 wherein:
a) said means (66) to transport ions comprises a three-element electrostatic aperture lens for the extraction of ions from said first region (A) and transport to said second region (B);
b) said means (69,83,85) to focus, accelerate and guide the ions comprises an electrostatic three-element cylinder lens (69) focusing the ions, and two pairs of electrostatic deflection plates (80,81), oriented horizontally and vertically to focus, accelerate and guide the ions through the aperture (77) between said second and third regions of the vacuum housing (51), and a pair of three-element electrostatic cylinder lenses (83,85), to accelerate and focus the ions emerging from the aperture (77) between said second and third regions into a tightly-collimated beam and to transport the ions through said third region (C) of the vacuum housing (51), wherein the ions gain sufficient velocity along the principal axis of the magnetic field to overcome certain natural repulsive forces arising from their motion along a magnetic field gradient; and
c) said means (186) to decelerate said ions comprises an electrostatic three-element aperture retardation lens, to decelerate the ions to thermal velocity in the homogeneous region of said magnetic field.

9. A spectrometer according to Claim 8 and further including means (68) to remove unwanted ions from the ionized sample.

10. Apparatus according to Claim 9, wherein said means (68) to remove comprise a low-resolution mass filter (68), comprising short electric-quadrupole rods equipped with leaky-dielectric field separators on both ends, to eliminate unwanted low-mass ions and to provide single-ion transmission selectively; wherein said ion cyclotron resonance mass analyzer cell (87) comprises six electrically-isolated metal plates (11 to 16) forming a box and situated in said third ultra-high vacuum chamber region (C) of the apparatus, and inserted into the homogeneous part of said strong magnetic field, trapping the ions within the confines of the cell, due to forces originating in electric and magnetic fields, whereby the presence, abundance, and masses of the trapped ions may be determined; and wherein said means (108) to render observable includes a variable-gain electronic amplification circuit (108) with a digital gain-control element for the detection of the ICR image current, said circuit providing automatic regulation of the amplitude of the signal, said circuit operating such that the signal amplitude is first measured in a short time interval and the gain of the amplifier is set proportionately and held constant during a longer signal-acquisition period, so that the output signal of the circuit has ostensibly the same amplitude, regardless of the abundance of ions trapped in the cell whereby the range of measurable signal amplitudes in chromatographic mass spectrometric experiments is improved.

11. A method for analyzing chemical samples by Fourier transform ion cyclotron resonance mass spectrometry, comprising the steps of:
a) introducing and vaporizing a sample in a first area which is in a first vacuum region (C);
b) ionizing the sample;
c) transporting the ions in a collimated beam by the application of electrostatic lens means to an ion cyclotron resonance mass-analyzer cell (87) wherein the ions can be trapped by applied electric and magnetic fields; said mass-analyzer cell being in a further vacuum region of decreased pressure;
d) accelerating the trapped ions into larger orbits by application of a radio-frequency oscillating electric field; and
e) measuring the exact ionic masses by observation of ion cyclotron resonance frequencies, manifest in an alternating electric current induced in the ICR cell walls by the ionic motions, and rendered observable by amplifying, digitizing, and Fourier transforming said current.

12. The method according to Claim 11 and further including operating in a narrow-band mode, by mixing the ICR signal with an alternating voltage supplied by a local oscillator (135), thereby narrowing the observed mass-range and providing improved resolution and mass accuracy; further including carrying out storage and numerical signal-averaging of the digitized ICR mass spectral signals in exceptionally large data arrays, in a partitionable ultra-high-speed buffer memory (136) and arithmetic-logic circuitry (138) respectively, whereby the resolution and mass-accuracy obtained in the mass spectral measurements are increased; and further including using a digital vector arithmetic processor (190) to provide ultra-high-speed Fourier transformation and other mathematical operations, whereby exceptionally large data arrays can be acquired and processed in a time-period compatible with ephemeral chromatographic sample-sources and rapid-vaporization direction-insertion probes.

13. An apparatus according to claim 1, wherein the means to render observable include a variable-gain electronic amplification circuit (108) with a digital gain-control element for the detection of the image current of the trapped ions, said circuit includes means (112) to provide automatic regulation of the amplitude of the signal, and timing means (125,127,129) causing said circuit to operate such that the signal amplitude is first measured in a short time interval and the gain of the amplifier (112) is set proportionately and held constant during a longer signal-acquisition period, so that the output signal of the circuit has ostensibly the same amplitude, regardless of the abundance of ions trapped in a cell whereby the range of measurable signal amplitudes in chromatographic mass spectrometric experiments is improved.

14. Apparatus according to Claim 13 and further including means (106) to digitize the output of said variable gain circuit; further including a local oscillator (135) and means (132) for mixing the output of said variable gain circuit (108) with an alternating voltage supplied by said local oscillator (135), thereby narrowing the observed mass-range and providing improved resolution and mass accuracy; futher including means (136,138) for storage and numerical signal-averaging of the digitized ICR mass spectral signals in exceptionally large data arrays, including a partitionable ultra-high-speed buffer memory (136) and arithmetic-logic circuitry (138), whereby the resolution and mass-accuracy obtained in the mass spectral measurements are increased; and further including a digital vector arithmetic processor (190), programmed to provide ultra-high-speed Fourier transformation and other mathematical operations, whereby exceptionally large data arrays can be acquired and processed in a time-period compatible with ephemeral chromatographic sample-sources and rapid-vaporization direction-insertion probes.

15. Apparatus according to Claim 13 wherein said variable gain circuit characterizing:
a) a voltage controlled amplifier (112);
b) a differential amplifier (110) coupling the ICR signal to said voltage controlled amplifier (112),
c) a gated peak detector (114) receiving an output from said differential amplifier (110);
d) means (92,116,118) for scaling the output of said gated peak detector (114), said means providing its output as a gain control input to said voltage controlled amplifier (112).

16. Apparatus according to Claim 15 wherein said means for scaling characterizing:
a) an analog to digital converter (116) for converting the output of said peak detector to a digital signal;
b) a digital computer (92) programmed to receive said digital signal and provide a scaled digital output; and
c) a digital to analog converter (118) having said scaled digital output as an input and providing its output to said voltage controlled amplifier (112).

## Patentansprüche

1. Ionenzyklotronresonanz-Massenspektrometer mit Fouriertransformation zum Messen genauer Massen positiv und negativ ionisierter Moleküle in einer verdampften chemischen Probe, mit:
a) einem Vakuumgehäuse (51), das in einen ersten, zweiten und dritten differenzmäßig gepumpten Vakuumbereich (A, B, C) unterteilt ist, die durch Öffnungen (75, 77) voneinander getrennt werden, um den Innendruck zu erniedrigen;
b) einer Einrichtung (65, 67) zum Einleiten, Verdampfen und Ionisieren chemischer Materialien im ersten Bereich des Vakuumgehäuses (51);
c) einer Einrichtung (66) zum Transportieren von Ionen vom ersten Bereich in den zweiten Bereich des Vakuumgehäuses;
d) einer Einrichtung (68) zum Erzeugen eines starken homogenen Magnetfelds mit einer Hauptachse, die innerhalb des dritten Bereichs des Vakuumgehäuses liegt, und das einen inhomogenen Bereich enthält, der sich in den zweiten Bereich hinein erstreckt;
e) eine elektrostatische Linseneinrichtung (69, 83, 85) zum Fokussieren, Beschleunigen und Führen der Ionen entlang der Hauptachse des Magnetfelds im inhomogenen Randbereich des Felds sowie durch die Öffnung (77), die den zweiten und dritten Bereich des Vakuumgehäuses (51) voneinander trennt;
f) einer Einrichtung (86) zum Verzögern der Ionen auf nahezu thermische Geschwindigkeit im homogenen Bereich des Magnetfelds;
g) einer Ionenzyklotronresonanz-Massenanalysatorzelle (87) zum Einfangen der Ionen in einem begrenzten Raumvolumen, das im dritten Ultrahochvakuum-Kammerbereich (C) des Gehäuses (51) im homogenen Teil des starken Magnetfelds liegt;
h) einer Einrichtung (71) zum Einführen eines gepulsten Reaktionsgases in die Zelle zum Herbeiführen reagierender Kollisionen;
i) einer Einrichtung (11 bis 16) zum Erzeugen eines schwingenden elektrischen Felds zum Beschleunigen der eingefangenen Ionen auf größere Radien der Umlaufbahnen, um dadurch beobachtete, kohärente Bewegungen der Ionen zu erzeugen; und
j) einer Einrichtung (108) zum Sichtbarmachen der charakteristischen Frequenzen der Umlaufbahnbewegungen der eingefangenen Ionen, wodurch genaue Ionenmassen berechnet werden können.

2. Spektrometer nach Anspruch 1, ferner mit einer Einrichtung (68) zum Beseitigen unerwünschter Ionen aus der ionisierten Probe und ferner mit einer Einrichtung für Betrieb in einem Heterodyn- oder schmalbandigen Modus zum Verbessern der Massenauflösung.

3. Spektrometer nach Anspruch 1, bei dem das Vakuumgehäuse (51) folgendes aufweist: drei rohrförmige Sechswegekreuze mit Flansch, die durch rohrförmige Abschnitte miteinander verbunden sind und durch kleine Öffnungen (75, 77) im ersten, zweiten und dritten Bereich (A, B, C) voneinander getrennt sind, und eine erste, zweite und dritte kryostatische Hochvakuumpumpe (63) zum Abpumpen des ersten, zweiten und dritten Bereichs; wobei die Einrichtung zum Einleiten eine Einrichtung zum Einleiten und Verdampfen fester chemischer Proben aufweist; wobei die Einrichtung zum Einleiten eine Einrichtung zum Einleiten chemischer Proben, die in Gas und flüssigen Trägern gelöst sind und von chromatographischen Trenneinrichtungen herrühren, und eine Einrichtung (67) zum Ionisieren der Probenmoleküle aufweist; wobei die Einrichtung (66) zum Transportieren eine elektrostatische Aperturlinse (66) aus drei Elementen zum Entnehmen der Ionen aus der Einrichtung (65, 67) zum Einleiten, Verdampfen und Ionisieren aufweist; wobei die Einrichtung (68) zum Entfernen ein Massenfilter geringer Auflösung mit kurzen, elektrischen Quadrupolstäben aufweist, die an beiden Enden mit leckbehafteten, dielektrischen Feldtrenneinrichtungen versehen sind, um unerwünschte Ionen niedriger Masse zu entfernen und um selektiv für Transmission eines einzelnen Ions zu sorgen; wobei die Einrichtung (69, 83, 85) zum Fokussieren, Beschleunigen und Führen eine elektrostatische Zylinderlinse (69) aus drei Elementen, die den zwischen den Quadrupolstäben heraustretenden Ionenstrahl fokussiert, und zwei Paare elektrostatischer Ablenkplatten (80, 81) aufweist, die horizontal und vertikal ausgerichtet sind, um den Ionenstrahl durch die Öffnung zwischen dem zweiten und dritten Bereich des Vakuumgehäuses zu führen.

4. Vorrichtung nach Anspruch 3, bei der die Einrichtung (69, 83, 85) zum Fokussieren, Beschleunigen und Führen ferner ein Paar elektrostatische Zylinderlinsen (83, 85) aus drei Elementen aufweist, die die aus der Öffnung (77) zwischen dem zweiten und dritten Bereich austretenden Ionen in einen eng kollimierten Strahl fokussiert, um die Ionen durch den dritten Bereich (C) des Vakuumgehäuses (51) zu transportieren, wobei die Ionen ausreichend Geschwindigkeit entlang der Hauptachse des Magnetfelds gewinnen, um bestimmte natürliche Abstoßungskräfte zu überwinden, die von ihrer Bewegung entlang eines Magnetfeldgradienten herrühren; wobei die Einrichtung (86) zum Verzögern eine elektrostatische, verzögernde Aperturlinse aus drei Elementen aufweist, die vor der Zelle angeordnet ist, um die Ionen vor dem Eintreten in die Zelle auf thermische Geschwindigkeit zu verlangsamen, wodurch wirkungsvolles Ioneneinfangen erleichtert ist; wobei die Ionenzyklotronresonanz-Massenanalysatorzelle (87) sechs elektrisch isolierte Metallplatten (11 bis 16) aufweist, die einen Kasten bilden und die im dritten Ultrahochvakuum-Kammerbereich (C) der Vorrichtung angeordnet sind und im homogenen Teil des starken Magnetfelds angeordnet sind und die Ionen innerhalb der Grenzen der Zelle aufgrund der Kräfte einfangen, die vom elektrischen und magnetischen Feld herrühren, wodurch das Vorhandensein, die Häufigkeit und die Massen der eingefangenen Ionen bestimmt werden können; und wobei die Einrichtung zum Beobachtbarmachen eine elektronische Verstärkungsschaltung (108) mit veränderbarer Verstärkung mit einem digitalen verstärkungssteuernden Element für die Messung des ICR-Bildstroms aufweist, welche Schaltung für eine automatische Einstellung der Amplitude des Signals sorgt und die so arbeitet, daß die Signalamplitude zunächst in einem kurzen Zeitintervall gemessen wird und die Verstärkung des Verstärkers proportional eingestellt wird und während einer längeren Signalerfassungsperiode konstant gehalten wird, so daß das Ausgangssignal der Schaltung scheinbar dieselbe Amplitude aufweist, unabhängig von der Häufigkeit der in der Zelle eingefangenen Ionen, wodurch der Bereich der meßbaren Signalamplituden bei Versuchen mit chromatographischer Massenspektroskopie verbessert ist.

5. Vorrichtung nach Anspruch 4, ferner mit einem Ortsoszillator (135) und einer Einrichtung (132) zum Mischen des ICR-Signals mit einer Wechselspannung, die vom Ortsoszillator geliefert wird, um dadurch den beobachteten Massenbereich einzuengen und für verbesserte Auflösung und Massengenauigkeit zu sorgen.

6. Vorrichtung nach Anspruch 4 mit einer Einrichtung (116) zum Digitalisieren des ICR-Signals und ferner mit einer Einrichtung (136, 138) zum Abspeichern und numerischen Signalmitteln der digitalisierten ICR-Massenspektroskopiesignale in außerordentlich großen Datenfeldern, mit einem unterteilbaren, ultraschnellen Pufferspeicher (136) und einer arithmetisch-logischen Schaltung (138), wodurch die Auflösung und die Massengenauigkeit, wie sie bei den Massenspektroskopiemessungen erhalten werden, erhöht werden.

7. Vorrichtung nach Anspruch 6, ferner mit einem digitalen, arithmetischen Vektorprozessor (190), der so programmiert ist, daß er für ultraschnelle Fouriertransformation und andere mathematische Vorgänge sorgt, wodurch außerordentlich große Datenfelder erfaßt und in einer Zeitspanne verarbeitet werden können, die mit kurzlebigen chromatographischen Probenquellen und Richtungseinführungssonden für schnelle Verdampfung verträglich ist.

8. Vorrichtung nach Anspruch 1, bei der:
a) die Einrichtung (66) zum Transportieren von Ionen eine elektrostatische Aperturlinse aus drei Elementen für das Entnehmen von Ionen aus dem ersten Bereich (A) und zum Transportieren derselben in den zweiten Bereich (B) aufweist;
b) die Einrichtung (69, 83, 85) zum Fokussieren, Beschleunigen und Führen der Ionen eine elektrostatische Zylinderlinse (69) aus drei Elementen, die die Ionen fokussiert, und zwei Paare elektrostatischer Ablenkplatten (80, 81), die horizontal und vertikal angeordnet sind, um die Ionen zu fokussieren, zu beschleunigen und durch die Öffnung (77) zwischen dem zweiten und dritten Bereich des Vakuumgehäuses (51) zu führen, und ein Paar elektrostatische Zylinderlinsen (83, 85) aus drei Elementen aufweist, um die aus der Öffnung (77) zwischen dem zweiten und dritten Bereich austretenden Ionen zu beschleunigen und in einen eng kollimierten Strahl zu fokussieren und Ionen durch den dritten Bereich (C) des Vakuumgehäuses (51) zu transportieren, in dem die Ionen ausreichend Geschwindigkeit entlang der Hauptachse des Magnetfelds gewinnen, um bestimmte natürliche Abstoßungskräfte zu überwinden, die von ihrer Bewegung entlang eines Magnetfeldgradienten herrühren; und
c) die Einrichtung (186) zum Verlangsamen der Ionen eine elektrostatische, verzögernde Aperturlinse aus drei Elementen aufweist, um die Ionen im homogenen Bereich des Magnetfelds auf thermische Geschwindigkeit zu verlangsamen.

9. Spektrometer nach Anspruch 8, ferner mit einer Einrichtung (68) zum Entfernen unerwünschter Ionen aus einer ionisierten Probe.

10. Vorrichtung nach Anspruch 9, bei der die Einrichtung (68) zum Entfernen ein Massenfilter (68) geringer Auflösung aufweist, mit kurzen elektrischen Quadrupolstäben, die an beiden Enden mit stromleckenden, dielektrischen Feldtrenneinrichtungen versehen sind, um unerwünschte Ionen geringer Masse zu beseitigen und selektiv für Transmission eines einzelnen Ions zu sorgen; wobei die Ionenzyklotronresonanz-Massenanalysatorzelle (87) sechs elektrisch isolierte Metallplatten (11 bis 16) aufweist, die einen Kasten bilden und die im dritten Ultrahochvakuum-Kammerbereich (C) der Vorrichtung angeordnet sind und im homogenen Teil des starken Magnetfelds angeordnet sind und die Ionen innerhalb den Grenzen der Zelle aufgrund der Kräfte einfangen, die vom elektrischen und magnetischen Feld herrühren, wodurch das Vorhandensein, die Häufigkeit und die Massen der eingefangenen Ionen bestimmt werden können; und wobei die Einrichtung zum Beobachtbarmachen eine elektronische Verstärkungsschaltung (108) mit veränderbarer Verstärkung mit einem digitalen verstärkungssteuernden Element für die Messung des ICR-Bildstroms aufweist, welche Schaltung für eine automatische Einstellung der Amplitude des Signals sorgt und die so arbeitet, daß die Signalamplitude zunächst in einem kurzen Zeitintervall gemessen wird und die Verstärkung des Verstärkers proportional eingestellt wird und während einer längeren Signalerfassungsperiode konstant gehalten wird, so daß das Ausgangssignal der Schaltung scheinbar dieselbe Amplitude aufweist, unabhängig von der Häufigkeit der in der Zelle eingefangenen Ionen, wodurch der Bereich der meßbaren Signalamplituden bei Versuchen mit chromatographischer Massenspektroskopie verbessert ist.

11. Verfahren zum Analysieren chemischer Proben durch Ionenzyklotronresonanz-Massenspektrometrie mit Fouriertransformation, mit folgenden Schritten:
a) Einleiten einer Probe in einen ersten Bereich, der in einem ersten Vakuumbereich (C) vorliegt, und Verdampfen der Probe in diesem Bereich;
b) Ionisieren der Probe;
c) Transportieren in einem kollimierten Strahl durch Anwenden einer elektrostatischen Linseneinrichtung zu einer Ionenzyklotronresonanz-Massenanalysatorzelle (87), in der die Ionen durch Anlegen elektrischer und magnetischer Felder eingefangen werden können; wobei die Massenanalysatorzelle in einem weiteren Vakuumbereich mit verringertem Druck liegt;
d) Beschleunigen der eingefangenen Ionen in größere Umlaufbahnen durch Anlegen eines hochfrequent schwingenden elektrischen Felds und
e) Messen der genauen Ionenmassen durch Beobachten der Ionenzyklotronresonanz-Frequenzen, die sich in einem elektrischen Wechselstrom zeigen, der durch die Ionenbewegungen in den Wänden der ICR-Zelle induziert wird, und die durch Verstärken, Digitalisieren und Fouriertransformieren des Stroms sichtbar gemacht werden.

12. Verfahren nach Anspruch 11, ferner mit einem Betreiben in einem schmalbandigen Modus durch Mischen des ICR-Signals mit einer von einem Ortsoszillator (135) gelieferten Wechselspannung, wodurch der beobachtete Massenbereich eingeengt wird und für verbesserte Auflösung und Massengenauigkeit gesorgt wird; ferner mit dem Ausführen des Speicherns und numerischen Signalmittelns der digitalisierten ICR-Massenspektroskopiesignale in außerordentlich großen Datenfeldern in einem unterteilbaren ultraschnellen Pufferspeicher (136) bzw. einer arithmetisch-logischen Schaltung (138), wodurch die Auflösung und die Massengenauigkeit, wie sie bei den Massenspektroskopiemessungen erzielt werden, erhöht werden; und ferner mit der Verwendung eines digitalen, arithmetischen Vektorprozessors (190), um für ultraschnelle Fouriertransformation und andere mathematische Operationen zu sorgen, wodurch außerordentlich große Datenfelder erfaßt und in einer Zeitspanne verarbeitet werden können, die mit kurzlebigen Probenquellen und Richtungseinführungssonden für schnelle Verdampfung verträglich sind.

13. Vorrichtung nach Anspruch 1, bei der die Einrichtung zum Sichtbarmachen eine elektronische Verstärkungsschaltung (108) mit veränderlicher Verstärkung mit einem digitalen Verstärkungseinstellelement für die Erfassung des Bildstroms der eingefangenen Ionen aufweist, wobei die Schaltung eine Einrichtung (112) zum Sorgen für eine automatische Einstellung der Amplitude des Signals und eine Zeitsteuereinrichtung (125, 127, 129) aufweist, die bewirkt, daß die Schaltung so arbeitet, daß die Signalamplitude zunächst in einem kurzen Zeitintervall gemessen wird und die Verstärkung des Verstärkers (112) proportional eingestellt wird und während einer längeren Signalerfassungsperiode konstant gehalten wird, so daß das Ausgangssignal der Schaltung scheinbar dieselbe Amplitude aufweist, unabhängig von der Häufigkeit von in einer Zelle eingefangenen Ionen, wodurch der Bereich der meßbaren Signalamplituden bei chromatographischen Massenspektrometrieversuchen verbessert ist.

14. Vorrichtung nach Anspruch 13, ferner mit einer Einrichtung (106) zum Digitalisieren des Ausgangssignals der Schaltung mit veränderlicher Verstärkung; ferner mit einem Ortsoszillator (135) und einer Einrichtung (132) zum Mischen des Ausgangssignals der Schaltung mit veränderlicher Verstärkung (108) mit einer vom Ortsoszillator (135) gelieferten Wechselspannung, um dadurch den beobachteten Massenbereich einzuengen und für verbesserte Auflösung und Massengenauigkeit zu sorgen; ferner mit einer Einrichtung (136, 138) zur Speicherung und numerischen Signalmittelung der digitalisierten ICR-Massenspektroskopiesignale in außerordentlich großen Datenfeldern, mit einem unterteilbaren ultraschnellen Pufferspeicher (136) und einer arithmetisch-logischen Schaltung (138), wodurch die Auflösung und Massengenauigkeit, wie sie bei den Massenspektroskopiemessungen erhalten werden, erhöht sind; und ferner mit einem digitalen, arithmetischen Vektorprozessor (190), der so programmiert ist, daß er für ultraschnelle Fouriertransformation und andere mathematische Operationen sorgt, wodurch außerordentlich große Datenfelder erfaßt und in einer Zeitspanne verarbeitet werden können, die mit kurzlebigen chromatographischen Probenquellen und Richtungseinführungssonden für schnelle Verdampfung verträglich ist.

15. Vorrichtung nach Anspruch 13, bei der die Schaltung mit variabler Verstärkung durch folgendes gekennzeichnet ist:
a) einen spannungsgesteuerten Verstärker (112);
b) einen Differenzverstärker (110), der das ICR-Signal mit dem spannungsgesteuerten Verstärker (112) verbindet;
c) einen geschalteten Spitzenwertdetektor (114), der das Ausgangssignal des Differenzverstärkers (110) empfängt und
d) eine Einrichtung (92, 116, 118) zum Skalieren des Ausgangssignals des geschalteten Spitzenwertdetektors (114), wobei die Einrichtung ihr Ausgangssignal als die Verstärkung steuerndes Eingangssignal an den spannungsgesteuerten Verstärker (112) gibt.

16. Vorrichtung nach Anspruch 15, bei der die Skaliereinrichtung durch folgendes gekennzeichnet ist:
a) einen Analog/Digital-Umsetzer (116) zum Umsetzen des Ausgangssignals des Spitzenwertdetektors in ein digitales Signal;
b) einen digitalen Computer (92), der so programmiert ist, daß er das digitale Signal empfängt und ein skaliertes digitales Ausgangssignal liefert; und
c) einen Digital/Analog-Umsetzer (118) mit einem skalierten digitalen Ausgangssignal als Eingangssignal, der sein Ausgangssignal an den spannungsgesteuerten Verstärker (112) liefert.

## Revendications

1. Spectromètre de masse à résonance cyclotron ionique à transformation de Fourier, pour la mesure de masses précises de molécules ionisées positivement et négativement, provenant d'un échantillon chimique vaporisé, comprenant :
a) une enceinte à vide (51) divisée en des première, seconde et troisième régions de vide (A,B,C) pompées au moyen d'un pompage (10) différentiel séparées par des ouvertures (75,77), pour réduire la pression interne,
b) des moyens (65, 67) introduire vaporiser et ioniser des substances chimiques dans ladite première région de ladite enceinte à vide (51);
c) des moyens (66) pour transférer des ions depuis ladite première région en direction de ladite seconde région de ladite enceinte à vide;
d) des moyens (68) pour produire un champ magnétique homogène intense possédant un axe principal situé dans ladite troisième région de ladite enceinte à vide et possédant une région hétérogène s'étendant dans ladite seconde région;
e) des moyens formant lentilles électrostatiques (69,83,85) pour focaliser, accélérer et guider les ions le long dudit axe principal dudit champ magnétique, dans la région hétérogène de fuite du champ, et à travers l'ouverture (77) séparant lesdites seconde et troisième régions de ladite enceinte à vide (51);
f) des moyens (86) pour décélérer des ions presque à la vitesse thermique dans la région homogène dudit champ magnétique;
g) une cellule (87) d'analyseur de masse à résonance cyclotron ionique pour piéger les ions dans un volume d'espace confiné, situé dans la troisième région (C) formant chambre à vide ultra-poussé de ladite enceinte (51), dans la partie homogène dudit champ magnétique intense;
h) des moyens (71) pour introduire un gaz réactif pulsé dans ladite cellule pour induire des collisions réactives;
i) des moyens (11 à 16) servant à produire un champ électrique oscillatoire pour accélérer les ions piégés sur des rayons orbitaux plus grands, ce qui permet de créer des déplacements cohérents observables des ions; et
j) des moyens (108) pour rendre observables les fréquences caractéristiques des déplacements orbitaux des ions piégés, ce qui permet de calculer des masses ioniques précises.

2. Spectromètre selon la revendication 1, comportant en outre des moyens (68) pour retirer des ions indésirables de l'échantillon ionisé; et contenant en outre des moyens pour réaliser un fonctionnement dans un mode hétérodyne ou à bande étroite pour améliorer la résolution de masse.

3. Spectromètre selon la revendication 1, dans lequel ladite enceinte à vide (51) se caractérise par trois croix tubulaires à six brides, interconnectées par des sections tubulaires et séparées par de petits orifices (75, 77) dans lesdites première, seconde et troisième régions (A,B,C) et en des première, seconde et troisième pompes cryogéniques à vide poussé (63) pour réaliser le pompage dans lesdites première, seconde et troisième régions; et dans lequel lesdits moyens d'introduction comprennent des moyens pour introduire et vaporiser des échantillons chimiques solides; et dans lequel lesdits moyens d'introduction comprennent des moyens pour introduire des échantillons chimiques dissous dans des supports gazeux et liquides provenant de séparateurs chromatographiques, et des moyens (67) pour ioniser lesdites molécules des échantillons; et dans lequel lesdits moyens de transfert (66) comprennent une lentille électrostatique à ouverture à trois éléments (66) pour l'extraction d'ions à partir des moyens (65,67) pour l'introduction, la vaporisation et l'ionisation; et dans lequel lesdits moyens d'élimination (68) comprennent un filtre de masse à faible résolution comprenant de courtes tiges formant quadripôles électriques et qui sont équipées, à leurs deux extrémités, de séparateurs de champ de fuite diélectrique, pour éliminer des ions de faible masse indésirables et réaliser de façon sélective la transmission d'un seul ion; et dans lequel lesdits moyens de focalisation, d'accélération et de guidage (69, 83, 85) comprennent une lentille cylindrique électrostatique à trois éléments (69) focalisant le faisceau d'ions sortant desdites tiges formant quadripôles, et deux couples de plaques déviatrices électrostatiques (80, 81) orientées horizontalement et verticalement de manière à guider le faisceau d'ions dans l'ouverture entre lesdites seconde et troisième régions de l'enceinte à vide.

4. Dispositif selon la revendication 3, dans lequel lesdits moyens de focalisation, d'accélération et de guidage (69, 83, 85) comprennent en outre un couple de lentilles cylindriques électrostatiques à trois éléments (83,85), qui accélèrent et focalisent les ions sortant de l'ouverture (77) entre lesdites seconde et troisième régions, sous la forme d'un faisceau étroitement collimaté de manière à transférer les ions à travers ladite troisième région (C) de l'enceinte à vide (51), et dans lequel les ions acquièrent une vitesse suffisante le long de l'axe principal du champ magnétique pour vaincre certaines forces naturelles de répulsion qui apparaissent sous l'effet de leur déplacement le long d'un gradient de champ magnétique; et dans lequel lesdits moyens de décélération (86) comprennent une lentille électrostatique de décélération à ouverture à trois éléments, qui est située en face de ladite cellule, pour décélérer les ions en les amenant à la vitesse thermique avant qu'ils ne pénètrent dans la cellule, ce qui facilite l'obtention d'un piégeage efficace des ions; et dans lequel ladite cellule (87) de l'analyseur de masse à résonance cyclotron ionique comprend six plaques métalliques électriquement isolées (11 à 16) formant une boîte et situées dans ladite troisième région (C) formant chambre à vide poussé du dispositif, et insérées dans la partie homogène dudit champ magnétique intense, et piégeant les ions dans les limites de la cellule, sous l'action de forces produites par des champs électriques et magnétiques, ce qui a pour effet que la présence, la quantité et les masses des ions piégés peuvent être déterminées; et dans lequel lesdits moyens d'observation comprennent un circuit amplificateur électronique à gain variable (108) comportant un élément de commande de gain numérique pour la détection du courant d'image ICR, ledit circuit réalisant une régulation automatique de l'amplitude du signal, et ledit circuit fonctionnant de sorte que l'amplitude du signal est tout d'abord mesurée pendant un bref intervalle de temps et que le gain de l'amplificateur est réglé d'une manière proportionnelle et est maintenu constant pendant une période plus longue d'acquisition du signal, de sorte que le signal de sortie du circuit possède manifestement la même amplitude, indépendamment de la quantité importante d'ions piégés dans la cellule, ce qui permet d'améliorer la gamme des amplitudes mesurables du signal lors d'expériences de spectrométrie de masse chromatographique.

5. Dispositif selon la revendication 4, comportant en outre un oscillateur local (135) et des moyens (132) pour mélanger le signal ICR à une tension alternative délivrée par ledit oscillateur local, ce qui permet de rétrécir la gamme de masses observée et d'obtenir une résolution améliorée et une précision de masse améliorée.

6. Dispositif selon la revendication 4, comportant des moyens (116) pour numériser ledit signal ICR, et comportant en outre des moyens (136, 138) pour mémoriser et former la moyenne numérique des signaux du spectre de masse ICR numérisés, dans des réseaux de données exceptionnellement étendus, incluant une mémoire tampon divisible (136) fonctionnant à très grande vitesse et un circuit arithmétique-logique (138), qui permet d'accroître la résolution et la précision de masse obtenues lors des mesures spectrales de masse.

7. Dispositif selon la revendication 6, comprenant en outre un processeur arithmétique vectoriel numérique (190) programmé de manière à réaliser une transformation de Fourier à très grande vitesse et d'autres opérations mathématiques, ce qui permet d'acquérir et de traiter des réseaux de données exceptionnellement étendus, en un intervalle de temps compatible avec des sources d'échantillons chromatographiques éphémères et des capteurs à insertion directionnelle de vaporisation rapide.

8. Dispositif selon la revendication 1, dans lequel :
a) lesdits moyens (66) servant à transférer les ions comprennent une lentille électrostatique à ouverture à trois éléments pour l'extraction d'ions à partir de ladite première région (A) et pour le transfert de ces ions en direction de ladite seconde région (B);
b) lesdits moyens (69, 83, 85) servant à focaliser, accélérer et guider les ions comprennent une lentille cylindrique électrostatique à trois éléments (69) focalisant les ions, et deux couples de plaques de déviation électrostatique (80, 81) orientées horizontalement et verticalement pour focaliser, accélérer et guider les ions à travers l'ouverture (77) entre lesdites seconde et troisième régions de l'enceinte à vide (52), et un couple de lentilles cylindriques électrostatiques à trois éléments (83, 85) pour accélérer et focaliser les ions sortant de l'ouverture (77) entre lesdites seconde et troisième régions, sous la forme d'un faisceau étroitement collimaté et transférer les ions à travers ladite troisième région (C) de l'enceinte à vide (51), les ions acquérant une vitesse suffisante le long de l'axe principal du champ magnétique pour vaincre certaines forces répulsives naturelles apparaissant sous l'effet de leur déplacement le long d'un gradient de champ magnétique; et
c) lesdits moyens (86) pour décélérer lesdits ions comprennent une lentille électrostatique de décélération à ouverture à trois éléments, pour décélérer les ions en les amenant à la vitesse thermique dans la région homogène dudit champ magnétique.

9. Spectromètre selon la revendication 8, comportant en outre des moyens (68) pour éliminer des ions indésirables de l'échantillon ionisé.

10. Dispositif selon la revendication 9, dans lequel lesdits moyens d'élimination (68) comprennent un filtre de masse de faible résolution (68), comprenant de courtes tiges formant quadripôles électriques, qui sont équipées, à leur deux extrémités, de séparateurs de champ de fuite diélectrique, pour supprimer des ions de faible masse indésirables et produire de façon sélective la transmission d'un seul ion; et selon lequel ladite cellule (86) de l'analyseur de masse à résonance cyclotron ionique comprend six plaques métalliques électriquement isolées (11 à 16) formant une boîte et situées dans ladite troisième région (C) formant chambre à vide extrêmement poussé du dispositif, et insérées dans la partie homogène dudit champ magnétique intense, et servant à piéger les ions dans les limites de la cellule, sous l'effet de forces produites par des champs électriques et magnétiques, ce qui a pour effet que la présence, la quantité et les masses des ions piégés peuvent être déterminées; et dans lequel lesdits moyens d'observation (108) comprennent un circuit amplificateur électronique à gain variable (108) comportant un élément de commande de gain numérique pour la détection du courant d'image ICR, ledit circuit réalisant une régulation automatique de l'amplitude du signal, ledit circuit fonctionnant de sorte que l'amplitude du signal est tout d'abord mesurée pendant un bref intervalle de temps et que le gain de l'amplificateur est réglé d'une manière proportionnelle et est maintenu constant pendant une période plus longue d'acquisition du signal, de sorte que le signal de sortie du circuit possède manifestement la même amplitude, indépendamment de la quantité importante d'ions piégés dans la cellule, ce qui permet d'améliorer la gamme des amplitudes mesurables du signal lors d'expériences de spectrométrie de masse chromatographique.

11. Procédé pour analyser des échantillons chimiques au moyen de la spectrométrie de masse à résonance cyclotron ionique, à transformation de Fourier, comprenant les étapes suivantes :
a) introduction et vaporisation d'un échantillon dans une première zone, qui est située dans une première région à vide (C);
b) ionisation de l'échantillon;
c) transfert des ions selon un faisceau collimaté grâce à l'utilisation de moyens en forme de lentilles électrostatiques jusqu'à une cellule (87) de l'analyseur de masse à résonance cyclotron ionique, dans laquelle les ions peuvent être piégés par des champs électriques et magnétiques appliqués; ladite cellule de l'analyseur de masse étant située dans une autre région à vide dans laquelle règne une pression réduite;
d) accélération des ions piégés suivant des orbites plus larges par application d'un champ électrique oscillatoire à haute fréquence; et
e) mesure des masses ioniques précises par observation des fréquences de résonance cyclotron ionique, se manifestant par un courant électrique alternatif induit dans les parois de la cellule ICR par les déplacements des ions, et rendues observables par amplification numérisation de transformation de Fourier dudit courant.

12. Procédé selon la revendication 11, incluant en outre le fonctionnement selon un mode à bande étroite, par mélange du signal ICR à une tension alternative délivrée par un oscillateur local (135), ce qui rétrécit la gamme de masses observée et fournit une résolution et une précision de masse améliorées; et comprenant en outre l'exécution de la mémorisation et de la formation de la moyenne numérique des signaux spectraux de masse ICR numérisés, dans des réseaux de données exceptionnellement étendus, dans une mémoire tampon divisible (136) fonctionnant à vitesse extrêmement élevée et dans un circuit arithmétique-logique (138) respectivement, ce qui accroît la résolution et la précision de masse obtenues dans les mesures spectrales de masse; et inclut en outre l'utilisation d'un processeur arithmétique vectoriel numérique (190) servant à exécuter une transformation de Fourier à vitesse extrêmement élevée et d'autres opérations mathématiques, ce qui permet d'acquérir et de traiter des réseaux de données exceptionnellement étendus, en un intervalle de temps compatible avec des sources d'échantillons chromatographiques éphémères et des capteurs à insertion directionnelle de vaporisation rapide.

13. Dispositif selon la revendication 1, dans lequel les moyens d'observation comprennent un circuit d'amplification électronique à gain variable (108) comportant un élément de commande numérique du gain pour détecter le courant image des ions piégés, ledit circuit comprend des moyens (112) pour réaliser une régulation automatique de l'amplitude du signal, et des moyens de cadencement (125,127,129) amenant ledit circuit à fonctionner de telle sorte que l'amplitude du signal est tout d'abord mesurée pendant un bref intervalle de temps et que le gain de l'amplificateur (112) est réglé proportionnellement et est maintenu constant pendant une période plus longue d'acquisition du signal, de sorte que le signal de sortie du circuit possède manifestement la même amplitude, indépendamment de la grande quantité d'ions piégés dans une cellule, ce qui a pour effet d'améliorer la gamme des amplitudes mesurables du signal lors d'expériences de spectrométrie de masse chromatographique.

14. Dispositif selon la revendication 13, comportant en outre des moyens (106) pour numériser le signal de sortie dudit circuit à gain variable, et comportant en outre un oscillateur local (135) et des moyens (132) pour mélanger le signal de sortie dudit circuit à gain variable (108) à une tension alternative délivrée par ledit oscillateur local (135), de manière à rétrécir la gamme de masses observée et à fournir une résolution et une précision de masse améliorées; et comportant en outre des moyens (136, 138) pour mémoriser et former la moyenne numérique des signaux spectraux de masse ICR numérisés, dans des réseaux de données exceptionnellement étendus, incluant une mémoire tampon divisible (136) fonctionnant à très grande vitesse et un circuit arithmétique-logique (138), ce qui permet d'accroître la résolution et la précision de masse obtenues dans les mesures spectrales de masse; et incluant en outre un processeur arithmétique vectoriel numérique (190) programmé de manière à exécuter une transformation de Fourier à vitesse extrêmement élevée et d'autres opérations mathématique; ce qui permet d'acquérir et de traiter des réseaux de données exceptionnellement étendus, en un intervalle de temps compatible avec des sources d'échantillons chromatographiques éphémères et des capteurs à insertion directionnelle de vaporisation rapide.

15. Procédé selon la revendication 13, dans lequel ledit circuit à gain variable se caractérise par :
a) un amplificateur (112) commandé par la tension;
b) un amplificateur différentiel (110) appliquant le signal ICR audit amplificateur (112) commandé par la tension,
c) un détecteur de maximum commandé (114), qui reçoit un signal de sortie dudit amplificateur différentiel (110);
d) des moyens (92,116,118) pour étalonner le signal de sortie dudit détecteur de maximum commandé (114), lesdits moyens envoyant leur signal de sortie sous la forme d'un signal d'entrée de commande de gain audit amplificateur (112) commandé par la tension.

16. Dispositif selon la revendication 15, dans lequel lesdits moyens d'étalonnage sont caractérisés par :
a) un convertisseur analogique/numérique (116) pour convertir le signal de sortie dudit détecteur de maximum en un signal numérique;
b) un ordinateur numérique (92) programmé de manière à recevoir ledit signal numérique et à délivrer ledit signal numérique étalonné; et
c) un convertisseur numérique/analogique (118) recevant ledit signal numérique étalonné en tant que signal d'entrée et envoyant son signal de sortie audit amplificateur (112) commandé par la tension.
